# EUROPEAN PATENT APPLICATION

(11) **EP 4 848 145 A1**
(43) Date of publication of application: **02.12.2026**
(21) Application number: 26181269.7
(22) Date of filing: 27.05.2026
(51) Int. Cl.: G06N 3/0464, G06N 3/0455

(54) **METHOD FOR GENERATING MACHINE LEARNING MODEL, GENERATION DEVICE, AND GENERATION PROGRAM**

(30) Priority: 29.05.2025 JP 2025089883; 30.04.2026 JP 2026076409
(71) Applicant: Sumitomo Rubber Industries, Ltd., Kobe-shi, Hyogo 651-0072 (JP); NEC Corporation, 108-8001 Tokyo (JP)
(72) Inventor: OISHI, Kentaro, Kobe-shi, Hyogo, 651-0072 (JP); ITO, Wakana, Kobe-shi, Hyogo, 651-0072 (JP); IWANA, Hiroki, Tokyo, 108-8001 (JP); KOBAYASHI, Akira, Tokyo, 108-8001 (JP); SAKAMOTO, Sho, Tokyo, 108-8001 (JP)
(74) Representative: Manitz Finsterwald Patent- und Rechtsanwaltspartnerschaft mbB

(57) **Abstract**

Provided are an analysis method for a rubber composition and a method for generating a trained model, each enabling a reduction in the number of training data pairs used in appropriately defining a region corresponding to a component contained in a rubber composition in a microscopic image of the rubber composition using a machine learning model. The method for generating a machine learning model includes: preparing a plurality of first training data sets with different content to perform machine learning, the machine learning including inputting input data generated from a microscopic image showing a plurality of components contained in a rubber composition and outputting output data defining regions corresponding to the respective components appearing in the microscopic image; preparing a plurality of first machine learning models respectively having been trained using the first training data sets; comparing output data from the first machine learning models with each other to select one of the first machine learning models based on a first evaluation standard; preparing a plurality of second training data sets with different content by partly modifying the first training data set used for training the selected first machine learning model according to a first criterion; preparing a plurality of second machine learning models respectively having been trained using the second training data sets; and comparing output data from the second machine learning models with each other to select one of the second machine learning models based on a second evaluation standard.

## Description

### TECHNICAL FIELD

The present invention relates to methods for generating machine learning models, generation devices, and generation programs.

### BACKGROUND ART

In order to deepen knowledge about a rubber composition, techniques have been provided for capturing an image of a rubber composition with a microscope and analyzing the obtained microscopic image. For example, Patent Literature 1 discloses an analysis method for appropriately defining a region corresponding to a component contained in a rubber composition in a microscopic image of the rubber composition. The analysis method for a rubber composition includes (1) acquiring input data generated from a microscopic image of a rubber composition captured with a microscope, the microscopic image showing components contained in the rubber composition; (2) inputting the input data to a trained machine learning model and (3) deriving output data from the trained machine learning model, in which the output data is data defining regions corresponding to the components appearing in the microscopic image.

### CITATION LIST

### - Patent Literature

Patent Literature 1: JP 2024-084345 A

### SUMMARY OF INVENTION

### - Technical Problem

Generally, when performing machine learning as described above, preparation of a large amount of training data is required to improve output accuracy.
Unfortunately, the preparation of a large amount of training data takes time. In particular, machine learning relating to a microscopic image of a rubber composition captured with a microscope as described above requires training data pairs each consisting of an SEM image as input data and annotation data labeled by an operator who observed the SEM image, for example. An annotation image in which regions are defined with labels corresponding to the respective components in the rubber composition may be prepared manually. Thus, it takes a long time to prepare a large number of training data pairs.

The present invention aims to provide an analysis method for a rubber composition and a method for generating a trained model, each enabling a reduction in the number of training data pairs used in appropriately defining a region corresponding to a component contained in a rubber composition in a microscopic image of the rubber composition using a machine learning model.

### - Solution to Problem

Clause 1. A method for generating a machine learning model, including:
preparing a plurality of first training data sets with different content to perform machine learning, the machine learning including inputting input data generated from a microscopic image showing a plurality of components contained in a rubber composition and outputting output data defining regions corresponding to the respective components appearing in the microscopic image;
preparing a plurality of first machine learning models respectively having been trained using the first training data sets;
comparing output data from the first machine learning models with each other to select one of the first machine learning models based on a first evaluation standard;
preparing a plurality of second training data sets with different content by partly modifying the first training data set used for training the selected first machine learning model according to a first criterion;
preparing a plurality of second machine learning models respectively having been trained using the second training data sets; and
comparing output data from the second machine learning models with each other to select one of the second machine learning models based on a second evaluation standard.

Clause 2. The method for generating a machine learning model according to clause 1, further including:
preparing at least one third training data set with different content by partly modifying the second training data set used for training the selected second machine learning model according to a second criterion; and
preparing at least one third machine learning model each having been trained using the at least one third training data set.

Clause 3. The method for generating a machine learning model according to clause 1 or 2,
wherein the regions are colored with different colors for the respective corresponding components, and
the criteria each relate to at least one of an area of each region of the corresponding component or a distance between the regions.

Clause 4. The method for generating a machine learning model according to any one of clauses 1 to 3,
wherein the machine learning model to be generated is configured as a model selected from the group consisting of an attention network, SegNet, a feature pyramid network, UNet, PSPNet, TransNet, and TransUNet, or a model based on a model selected from the group.

Clause 5. The method for generating a machine learning model according to any one of clauses 1 to 4,
wherein the microscopic image is an image of the rubber composition captured with an electron microscope.

Clause 6. A machine learning model generation device including one or a plurality of processors configured to execute the method for generating a machine learning model according to any one of clauses 1 to 5.

Clause 7. A machine learning model generation program, the generation program causing one or a plurality of processors to execute the method for generating a machine learning model according to any one of clauses 1 to 5.

### - Advantageous Effects of Invention

The number of training data pairs used can be reduced in appropriately defining a region corresponding to a component contained in a rubber composition in a microscopic image of the rubber composition using a machine learning model.

### BRIEF DESCRIPTION OF DRAWINGS

FIG. 1 shows an example of a microscopic image of a rubber composition captured with a scanning electron microscope.
FIG. 2 shows a block diagram illustrating an electrical configuration of an analysis device according to an embodiment.
FIG. 3 shows a diagram for describing a structure of an individual machine learning model according to an embodiment.
FIG. 4 shows a flowchart of the flow of an analysis method using an analysis device.
FIG. 5 shows a diagram illustrating a principle of deriving a feature amount according to an embodiment.
FIG. 6 shows a diagram illustrating a principle of deriving a feature amount according to an embodiment.
FIG. 7 shows an example of a histogram generated based on FIGS. 5 and 6.
FIG. 8 shows a diagram for describing features extracted from positions of plot points on a histogram.
FIG. 9 shows a flowchart of the flow of an individual method for generating a machine learning model.
FIG. 10 shows a flowchart of an embodiment of a flow including generation of one learning model group including a plurality of machine learning models and selection of one of the plurality of machine learning models.
FIG. 11 shows a diagram schematically illustrating optimization of a machine learning model.
FIG. 12 shows a diagram illustrating a patch generation method.
FIG. 13 shows a diagram illustrating output of an output image by a first learning model A.
FIG. 14 shows a diagram illustrating output of an output image by a first learning model B.
FIG. 15 shows a diagram illustrating output of an output image by a second learning model C.
FIG. 16 shows a diagram illustrating output of an output image by a second learning model D.
FIG. 17 shows a diagram illustrating output of an output image by a second learning model E.
FIG. 18 shows a diagram illustrating output of an output image by a third learning model F.
FIG. 19 shows a flowchart of a method for optimizing a machine learning model.
FIG. 20 shows a diagram illustrating comparison between ground truth data and output data.

### DESCRIPTION OF EMBODIMENTS

The following will describe an analysis method for a rubber composition executed by an analysis device according to an embodiment of the present disclosure and a trained model generation method executed by a trained model generation device according to an embodiment of the present disclosure.

### <1. Overview>

A rubber composition is an elastic polymer compound which is typically generated by kneading a plurality of components together. Examples of the types of components include a polymer, a filler (e.g., silica, carbon black), and a crosslinking agent. Here, the rubber composition may be one before crosslinking or one after crosslinking. In a microscopic image of such a rubber composition captured with an electron microscope, at least a part of the components is identified by differences in pixel brightness. Hereinbelow, an example using a scanning electron microscopic (SEM) image as a microscopic image will be described. The microscope is not limited to SEM and may be any microscope usable for the observation of rubber compositions.

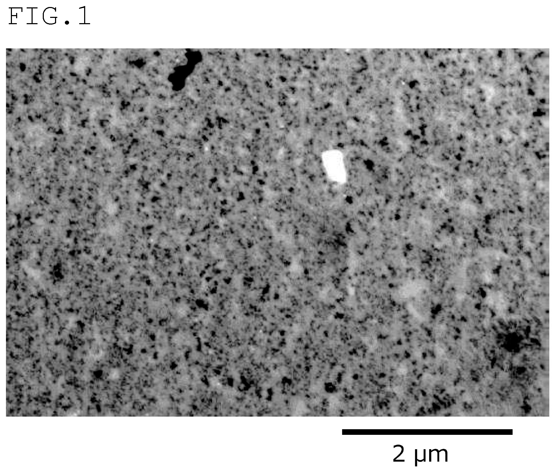

FIG. 1 shows an example of a microscopic image of a rubber composition captured with a scanning electron microscope. Mainly four components appear in the SEM image in FIG. 1. Specifically, carbon black (CB), styrene-butadiene rubber (SBR), natural rubber (NR), and zinc oxide (ZnO) appear in black color, dark gray color, light gray color, and white color, respectively. Thus, in the microscopic image of the rubber composition, information appears which mainly relates to the structure of the rubber composition, such as the shapes and sizes of textures formed by the components, and distances between the textures (dispersion states of the components).

In order to extract the above information as quantitative data, it is necessary to define a region corresponding to at least one component on the microscopic image and to divide the region from the other regions. The division of the regions based on the pixel brightness in the microscopic image uses a machine learning model as in the conventional example. However, for example, the microscopic image in FIG. 1 includes a ZnO region with a relatively high brightness, a CB region with a relatively low brightness, and SBR and NR regions each with a brightness between the brightnesses of the ZnO region and the CB region. Therefore, creation of an image showing the regions clearly separated from one another is not easy in a machine learning model and requires a large number of training data pairs.

In view of such an issue, an analysis device 1 according to the present embodiment is configured to execute region division on a microscopic image of a rubber composition using a trained machine learning model 131 (hereinafter also simply referred to as "model 131") described later. In addition, the analysis device 1 according to the present embodiment is also configured as a trained model generation device that causes a machine learning model to learn to generate the model 131. The structure of the analysis device 1 will be described below.

### <2. Structure of analysis device>

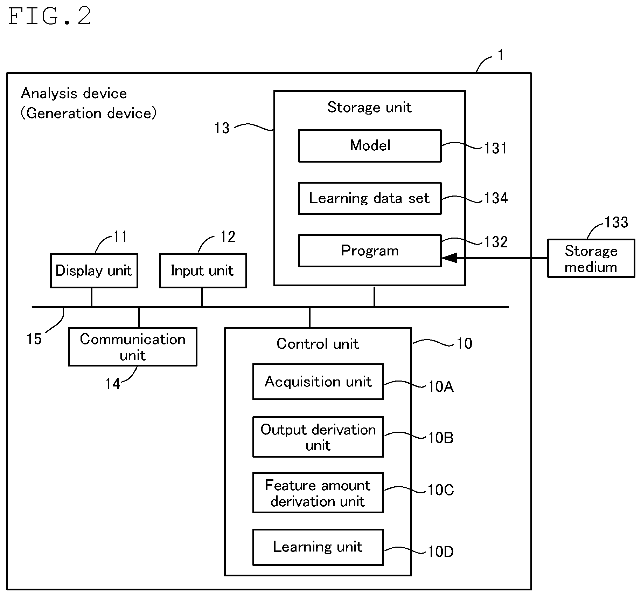

FIG. 2 shows a block diagram illustrating a hardware configuration of the analysis device 1. The analysis device 1 is a general-purpose computer as hardware and is actually produced as an information processing device such as a desktop personal computer, a laptop personal computer, a tablet, or a smartphone. The analysis device 1 is manufactured by installing a program 132 in a general-purpose computer, where the program 132 is acquired from a computer-readable storage medium 133 such as a CD-ROM or a USB memory or via a wired or wireless network. The program 132 causes the analysis device 1 to execute an operation described later. The analysis device 1 also functions as a machine learning model generation device.

As illustrated in FIG. 2, the analysis device 1 includes a control unit 10, a display unit 11, an input unit 12, a storage unit 13, and a communication unit 14. These units 10 to 14 are connected to each other via a bus line 15 and can communicate with each other. Some of the display unit 11, the input unit 12, and the storage unit 13 may be integrally incorporated in a main body (a housing that houses the control unit 10 and other units) of the analysis device 1, or these units may each be externally attached.

The display unit 11 can include a liquid crystal display, an organic EL display, a plasma display, a touch panel display, or other displays, and it displays various screens generated by the control unit 10. The input unit 12 can include a mouse, a keyboard, a touch panel, or other members, and it receives a user's operation on the analysis device 1. Both the display unit 11 and the input unit 12 may include the same touch panel display. The communication unit 14 functions as a communication interface that establishes various types of communication connections.

The storage unit 13 can include a rewritable nonvolatile memory such as a hard disk or a flash memory. In addition to the program 132, the storage unit 13 stores information defining the structure (architecture) of the model 131, parameters of the model 131 adjusted by the training processing described later, and training data used for the training processing.

The control unit 10 can include one or a plurality of processors such as a central processing unit (CPU) and a graphics processing unit (GPU), a read only memory (ROM), a random access memory (RAM), and other members. The control unit 10 reads and executes the program 132 in the storage unit 13, thereby virtually functioning as a computer including an acquisition unit 10A, an output derivation unit 10B, a feature amount derivation unit 10C, and a learning unit 10D.

The acquisition unit 10A acquires at least one of data of a microscopic image of the rubber composition and data processed based on the data via the input unit 12, the communication unit 14, and other units. The output derivation unit 10B inputs the data acquired by the acquisition unit 10A to the model 131, derives output data from the model 131, and generates a screen representing the output data. The feature amount derivation unit 10C derives one or a plurality of feature amounts relating to at least one of the structure and the physical properties of the rubber composition based on the output data. The learning unit 10D adjusts the parameters of the machine learning model by the below-described processing. The parameters adjusted by training may be considered as parameters that define the model 131. The learning unit 10D optimizes the machine learning model by the below-described processing.

Specifically, one or a plurality of processors constituting the control unit 10 each read the program 132 in the program storage unit 13, and execute the information processing operations in the acquisition unit 10A, the output derivation unit 10B, the feature amount derivation unit 10C, and the learning unit 10D using a physical computer. This series of information processing operations is a process implemented by the analysis apparatus 1.

### <3. Structure of machine learning model>

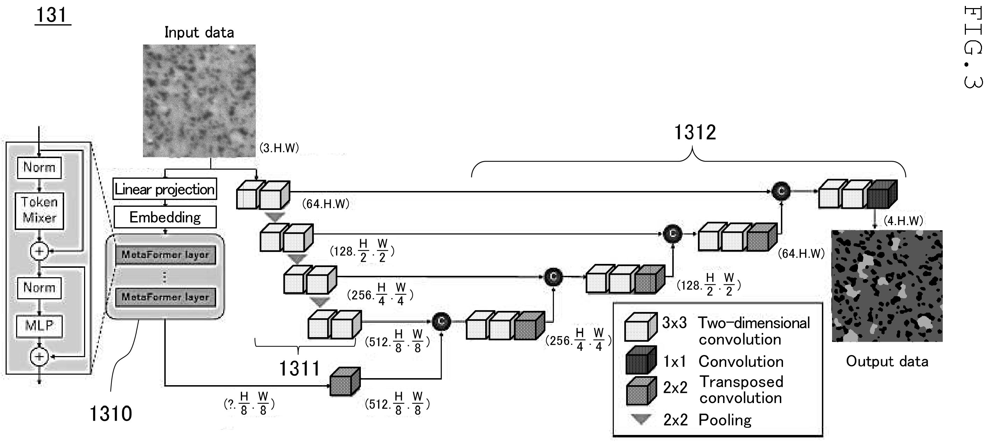

FIG. 3 is a diagram illustrating a structure of the model 131. The model 131 of the present embodiment is a deep learning model applied to image segmentation, particularly semantic segmentation, and more specifically, is a model based on a TransUNet model. The model 131 includes a Transformer encoder 1310 (hereinafter also simply referred to as "T encoder 1310") according to a Transformer model and a UNet encoder 1311 (hereinafter also simply referred to as "U encoder 1311") according to a UNet model. The model 131 further includes a UNet decoder 1312 (hereinafter also simply referred to as "U decoder 1312") according to the UNet model. The U decoder 1312 delivers output data having the same size as the input data.

The input data to be input to the model 131 is data of an image with a predetermined size defined by the number of pixels in height × width (H × W). The input data is data generated based on data of a microscopic image of the rubber composition captured with a microscope, and may be data of an H × W microscopic image itself or may be a plurality of patch images each having H × W pixels cut out from the microscopic image. Furthermore, the input data may be RGB image data or grayscale image data. As will be described later, the input data is input to the T encoder 1310 after being subjected to processing such as linear projection and is also input to the U encoder 1311. That is, putting input data into the model 131 includes inputting data generated based on the input data to the T encoder 1310 and inputting the input data to the U encoder 1311.

The type of the microscope for capturing the image of the rubber composition is not limited. Yet, the above-described scanning electron microscope as well as a transmission electron microscope are preferred, and a scanning electron microscope such as a backscattered electron microscope or a secondary electron microscope is more preferred. Although the magnification of the microscopic image is not limited, it is preferably 2500 times to 100,000 times.

In a case where the input data to the model 131 is a series of patch images cut out from one image, the patch images are each converted into a one-dimensional vector before being input to the T encoder 1310, and then further linearly projected onto a lower-dimensional tensor. The matrix (filter) used for linear projection has parameters adjusted by the training processing described later. On the other hand, in a case where the input data to the model 131 is not a series of patch images, a series of patch images with a predetermined size may be generated based on the input data, then each patch image may be converted into a one-dimensional vector, and the vector may be linearly projected onto a lower-dimensional tensor. Furthermore, position information in the original image may be added to these linearly projected tensors. As described above, data (also referred to as a token) generated based on the input data serves as an input to the T encoder 1310 having a subsequent meta-structure (MetaFormer layer). The T encoder 1310 is an encoder that extracts an overall feature of the input data.

The T encoder 1310 is configured to extract features across a channel direction and a spatial direction by repeatedly mixing the channel direction and the spatial direction with respect to an input token. More specifically, normalization processing of the input token is performed in a Norm layer, and feature amounts corresponding to patches with different spatial positions are mixed in a subsequent TokenMixer layer. Furthermore, in another Norm layer, data normalization is performed, and feature amounts between different channels are mixed for each token by a subsequent multilayer perceptron (MLP). The number of MLP layers and the number of repetitions can be appropriately set. Furthermore, the T encoder 1310 has parameters adjusted by training, such as a weighting coefficient and a bias of the MLP, and these parameters have been adjusted by the training processing described later. In the present embodiment, from the viewpoint of speeding up the processing and improving the accuracy of the region division, average pooling is adopted in the TokenMixer layer that performs feature extraction in the spatial direction. Yet, the processing performed in the TokenMixer layer is not limited thereto.

The output from the T encoder 1310 is a feature amount representing a global feature of the input data. One transposed convolution layer is connected to the T encoder 1310, and the output of the T encoder 1310 is input to the transposed convolution layer. In the transposed convolution layer, a kernel with a predetermined size is applied, and a transposed convolution operation is performed on the input data. Parameters included in the kernel have been adjusted by the training processing described later. Thus, two-dimensional data (feature map) having an increased size relative to the original data is output while retaining the features of the input data. This feature map has the same size as the output in the lowest hierarchy of the U encoder 1311 described later. The kernel size of the transposed convolution layer is not limited and can be appropriately set. Furthermore, an ReLU function is preferably applied upon the transposed convolution operation.

On the other hand, the U encoder 1311 has a structure in which two continuous two-dimensional convolution layers are connected by a pooling layer continuous to the convolution layers, thereby forming a plurality of hierarchies. Each hierarchy is skip-coupled to a corresponding hierarchy in the U decoder 1312 described later. In the convolution layer in each hierarchy of the U encoder 1311, feature extraction of the input image is performed. More specifically, two-dimensional data with a predetermined size is input to each convolution layer, and convolution by a convolution filter is performed. Thus, two-dimensional data (feature map) representing the features of the input image is output from each convolution layer. The convolution filter is a filter for extracting a feature of an input image. Parameters of the filter have been adjusted by the training processing described later. Furthermore, the ReLU function is preferably applied upon convolution operation, so that the extracted features are more emphasized. The number of filters in the convolution layer, a filter size, an interval of scanning the input data by the filter, a padding method for adjusting a size of the feature map to be created, and other conditions are not limited and can be appropriately set.

In each hierarchy, the feature map output from the second convolution layer is input to the pooling layer and down-sampled. Thus, the size of the two-dimensional data input to the convolution layer becomes smaller as the hierarchy goes down than the size of the feature map output in the upper hierarchy. In the pooling layer of the present embodiment, maximum value pooling is performed. Specifically, the input feature map is scanned by a kernel having a size smaller than that of the feature map, and the maximum value in the kernel is extracted. The size of the kernel and the interval of scanning the feature map can be appropriately set. In the present embodiment, the size of the kernel is 2 × 2, and the spatial resolution of the feature map is set to be half. The pooling layer does not have parameters adjusted by training.

In the U encoder 1311, a feature map of a small size in which smaller features are captured is output each time the processing by the combination of the convolution layer and the pooling layer advances. The number and the size of feature maps output in the last hierarchy of the U encoder 1311 are the same as those of feature maps output from the transposed convolution layers connected after the T encoder 1310. Data obtained by combining these feature maps (hereinafter also referred to as "combination map") becomes an input to the U decoder 1312. Inputting the combination map created in this manner to the U decoder 1312 enables region division reflecting both global information and strong local information in the input data.

The U decoder 1312 has a structure in which hierarchies that are skip-coupled to the respective hierarchy of the U encoder 1311 are formed. In each hierarchy, one transposed convolution layer is connected after two continuous two-dimensional convolution layers. The processing performed in the two-dimensional convolution layer and the transposed convolution layer is as described above. Yet, in the uppermost hierarchy in which the output data of the final model 131 is output, not the transposed convolution layer but one 1 × 1 convolution layer is connected after the two continuous two-dimensional convolution layers.

The above-described combination map is input to the first convolution layer of the lowermost hierarchy of the U decoder 1312. Then, through the processing in the subsequent convolution layers and transposed convolution layer, two-dimensional data having a larger size than the combination map is generated while maintaining the features of the input combination map.

The two-dimensional data output from the transposed convolution layer of the lowermost hierarchy is passed to the first convolution layer of a hierarchy one level up, together with the two-dimensional data (feature map) output from the skip-coupled convolution layer of the U encoder 1311. This enables generation of two-dimensional data larger than the passed two-dimensional data while maintaining the position information of the local feature extracted by the U encoder 1311. In the U decoder 1312, this processing is repeated for each hierarchy, and the size of the output two-dimensional data approaches the size of the input data of the model 131 each time this processing is repeated.

As described above, data to be the output of the model 131 is finally output from the 1 × 1 convolution layer in the uppermost hierarchy of the U decoder 1312. This output data is data of an image in which different brightnesses are assigned to respective regions occupied by textures of the components in the input data in the model 131. Specifically, the output data is data defining regions corresponding to the respective components of the rubber composition appearing in the microscopic image of the rubber composition. The output data can also be said as data in which pixels are assigned with labels representing the components corresponding to the pixels. The number of the labels is not limited and can be appropriately set upon training the model 131.

The processing in each structural element (1310, 1311, 1312) of the model 131 described above is a computer-implemented physical information processing that is accomplished by the execution of the program 132 stored in the program storage unit 13 by one or a plurality of the processors constituting the control unit 10.

### <4. Analysis method>

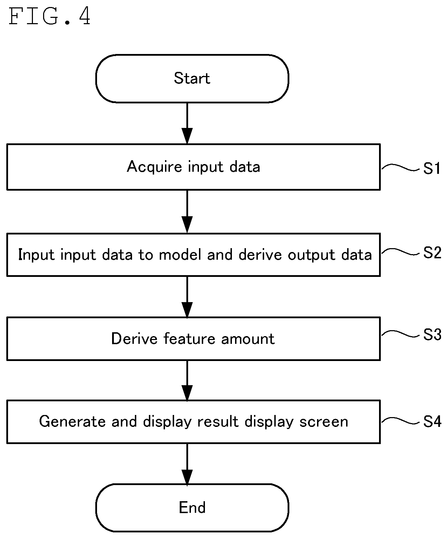

FIG. 4 is a flowchart showing the flow of an analysis method executed by the analysis device 1, including region division processing of a microscopic image of a rubber composition and derivation processing of a feature amount based on a result of the region division. The operation of the analysis device 1 will be described below with reference to FIG. 4.

First, the acquisition unit 10A acquires input data (step S1). As described above, the input data is data generated from a microscopic image of the rubber composition captured with a microscope. The acquisition of the input data by the acquisition unit 10A may be performed via a recording medium such as a CD-ROM or a USB memory, or may be performed by reading data held by an external device via network communication. In a case where the input data is a patch image cut out from a microscopic image of the rubber composition, the acquisition unit 10A may first acquire a microscopic image of the rubber composition and cut the microscopic image to create a patch image.

Subsequently, the output derivation unit 10B inputs the input data acquired in step S1 to the model 131 and derives output data from the model 131 (step S2). As described above, the output is data defining regions corresponding to the respective components of the rubber composition. The output is data created by dividing the input data into the regions of the respective components.

Subsequently, the feature amount derivation unit 10C derives a feature amount related to at least one of the structure and physical properties of the rubber composition based on the output data delivered in step S2 (step S3). Derivation of the feature amount is performed using persistent homology (hereinafter also referred to as "PH method") in the present embodiment, but the method is not limited thereto. As described below, in the present embodiment, the PH method is used to derive the feature amount regarding a dispersion state of a texture formed by a specific component, a shape of the texture formed by the component, and a size of the texture formed by the component.

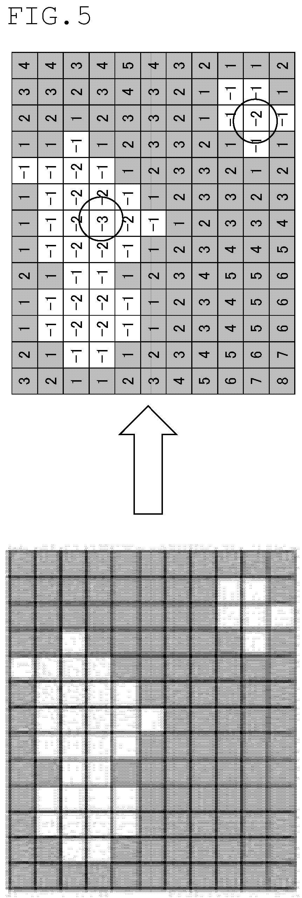

FIG. 5 shows a diagram illustrating a principle of deriving a feature amount by the PH method. First, the feature amount derivation unit 10C creates a binarized image for distinguishing a region corresponding to a component of interest from other regions based on the region-divided image output in step S2. In the example illustrated in the left part of FIG. 5, pixels in the regions corresponding to the component of interest are in white color and pixels in the other regions are in gray color. Thus, a texture of the component of interest is expressed as an island structure in the entire image.

Subsequently, the feature amount derivation unit 10C sets the pixels constituting the outline of each island structure as -1 pixels and then allocates a value obtained by subtracting 1 from the value of the adjacent pixel as a distance from these pixels increases by one pixel toward the inside of the island structure, thereby allocating a value of -1 or less to all the pixels of the island structure. Specifically, the feature amount derivation unit 10C allocates -1 to the pixels located on the outermost side of the island structure, allocates -2 to the pixels which are inside the island structure and adjacent to the -1 pixels, and allocates -3 to the pixel which is inside the island structure and adjacent to the -2 pixels. In this way, when the value representing a Manhattan distance is allocated to all the pixels forming the island structure, the pixel having the smallest allocated value is determined as a center of the island structure. In the example illustrated in the right part of FIG. 5, the -3 pixel in an island structure at the upper left of the binarized image and the -2 pixel in an island structure at the lower right of the binarized image are determined as central pixels of the respective island structures.

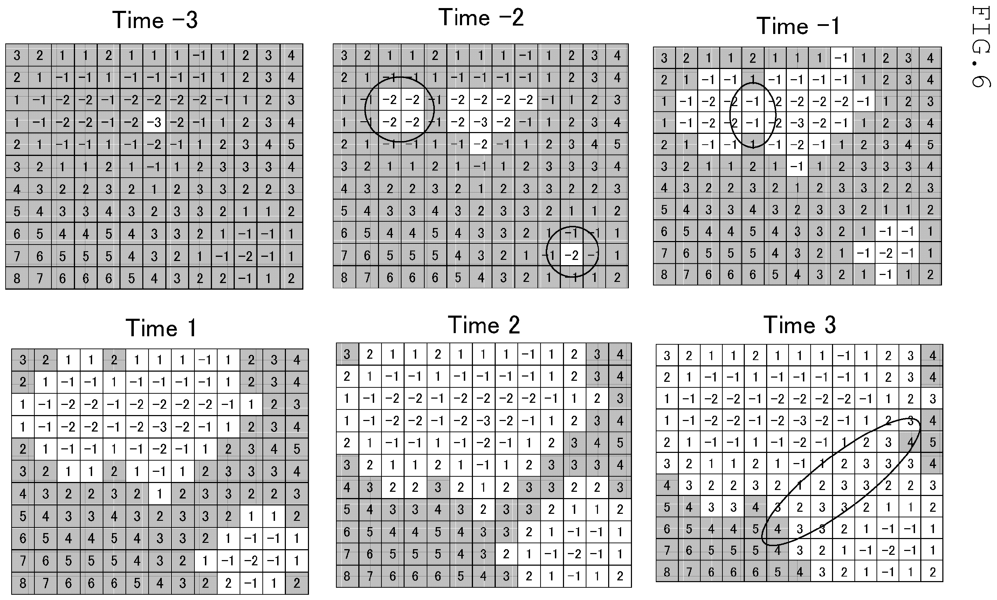

Next, the feature amount derivation unit 10C converts into a histogram a process of generating or combining a white region when the white region is expanded by one pixel per unit time from a pixel having the smallest value in the binarized image. This algorithm will be described with reference to FIG. 6 as an example. First, time (-3) corresponding to a value of a reference pixel is set as birth time of a center of the island structure, and at this time, it is assumed that only a -3 pixel is white and the other pixels are gray. At the next time (-2), a white region corresponding to one pixel is expanded from the reference pixel, and -2 pixels are newly depicted in white color. As a result, two new island structures are generated in addition to the island structure including the reference pixel. The time (-2) at which the island structures are newly generated is defined as a generation time. In the same manner, the white region is further expanded by one pixel at the next time (-1). As a result, two independent island structures at the time (-2) are bonded into one island structure. At the next time (1), a white region for one pixel is expanded outside the original island structures. In FIG. 6, 1 is displayed in a pixel that has newly become a white region. Similarly, at the next time (2), a white region is further expanded by one pixel from the pixel in which 1 is displayed. In FIG. 6, 2 is displayed in a pixel that has newly become a white region. At the next time (3), the white region is further expanded by one pixel from the pixel in which 2 is displayed. As a result, the originally independent two island structures are bonded into one island structure.

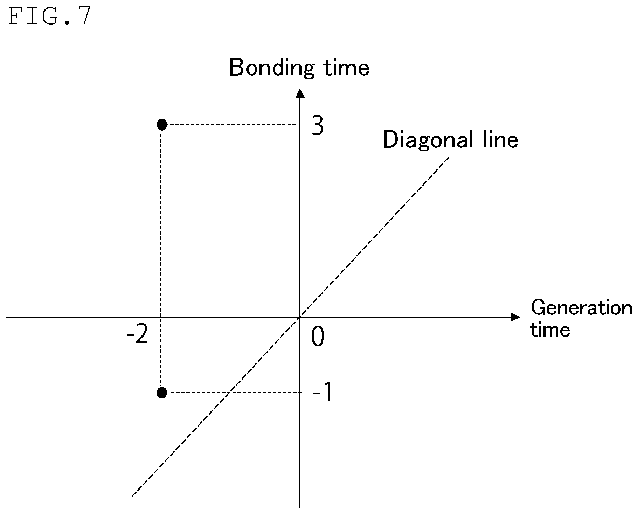

As illustrated in FIG. 7, a two-dimensional histogram is generated by plotting, on a plot plane including a horizontal axis representing birth time and a vertical axis representing death time, the birth time at which an island structure is newly generated by the above algorithm and the death time at which two independent island structures are bonded. In the example of FIG. 7, since the death times are -1 and 3 with respect to the birth time -2, two points (-2, -1) and (-2, 3) are plotted on the plot plane. In the present embodiment, this histogram is vectorized and the vectorized histogram is the feature amount related to the structure of the rubber composition.

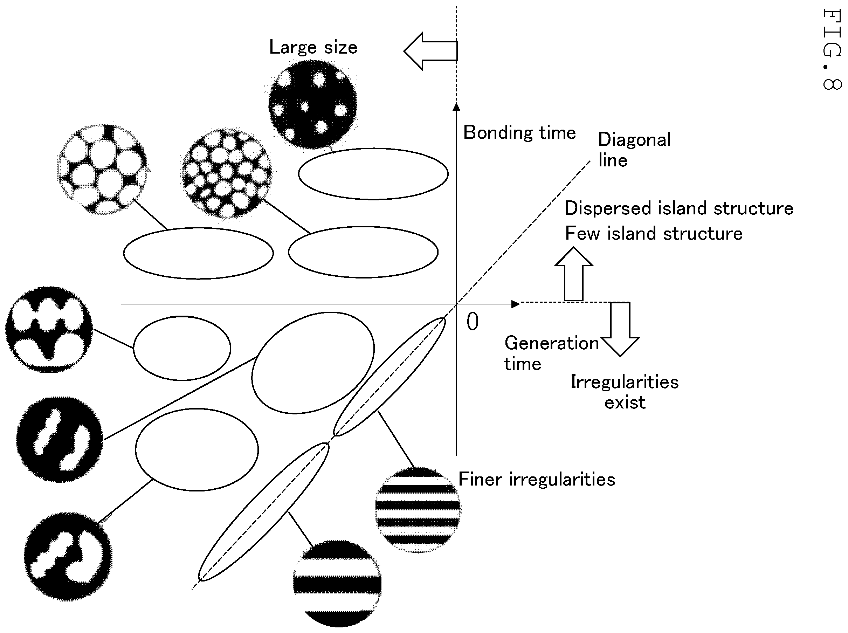

FIG. 8 shows a diagram illustrating information represented by positions of points plotted on the two-dimensional histogram. As illustrated in FIG. 8, the farther the plot point is from the horizontal axis in an upward direction, the less island structure is formed by the component of interest, or the greater a degree of dispersion of the component of interest is. This is because when the island structures are further separated from each other, a longer time is required until the two island structures are bonded in the above algorithm. On the other hand, plotted points below the horizontal axis indicate that a texture formed by the component of interest has irregularities. In this case, it is indicated that the originally single island structure is generated by bonding two or more island structures in the above algorithm. Furthermore, the further the plot point is left from the vertical axis, the larger the size of the island structure formed by the component of interest becomes. This is because when the size of the island structure is large, the time at which the island structure is newly generated in the algorithm becomes a time earlier than the time (-1) of reaching the outline of the original island structure. Moreover, the closer the plot point is to a diagonal line of the plot plane, the finer the irregularities in the texture formed by the component of interest are. This is because when the irregularities of the texture are fine, a difference between the birth time and the death time of the island structure decreases in the algorithm. When the shape of the originally single island structure has many irregularities and many constrictions, the number of plot points increases near the death time (-1). The feature amount derivation unit 10C derives a feature amount related to the structure of the rubber composition as described above.

In a case where the correlation between the structure of the specific component and the physical properties of the rubber composition is known, the feature amount derivation unit 10C can further derive the feature amount related to the physical properties of the rubber composition from the feature amount related to the structure of the component. The study of the present inventors has revealed that the feature amount related to at least one of the dispersion state of a specific component and the shape and the size of the aggregate of the specific component correlates with the physical properties of the rubber composition, such as Mooney viscosity, type A hardness (Hs), toluene swelling index (Swell), specific gravity, modulus at 100% elongation (M100), modulus at 200% elongation (M200), modulus at 300% elongation (M300), tensile strength at break (TB), elongation at break (EB), storage elastic modulus (E*, 0°C, 0.25%), tanδ (loss tangent, 0°C, 2.5%), E* (30°C, 1%), tanδ (30°C, 1%), temperature dispersion (TD), glass transition temperature (Tg), TD tanδ, and TD 1/2 W. TD tanδ is calculated based on the temperature dispersion, and TD 1/2 W represents a half-value width of a waveform of a temperature dispersion curve. As described above, in a case where the correlation between at least one of the feature amounts for a specific component and specific physical properties is known, deriving the feature amount can be considered as deriving the feature amount related to the physical properties of the rubber composition.

After step S3, the feature amount derivation unit 10C may generate a result display screen indicating the derived feature amount and may cause the display unit 11 to display the result display screen (step S4). The result display screen may include output data from the model 131.

The operations in steps S1 to S4 shown in the flowchart in FIG. 4 are each a computer-implemented step that is accomplished through the reading of the program 132 in the program storage unit 13 by one or a plurality of processors constituting the control unit 10 and thereby executing the information processing operations in the acquisition unit 10A, the output derivation unit 10B, the feature amount derivation unit 10C, and the learning unit 10D using a physical computer. In particular, the definition of regions using the model 131 in step S2 is a computer-implemented process in which the processor automatically executes operations to constitute the model 131 on the digitized input data.

### <5. Method for training individual learning model>

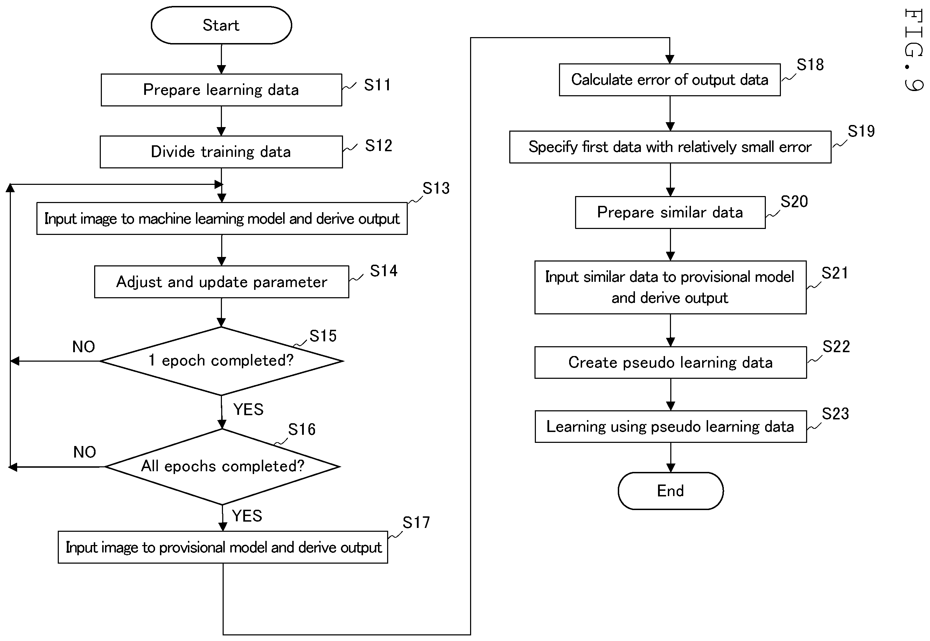

FIG. 9 shows a flowchart of the flow of a method for generating a machine learning model (machine learning model such as first, second, or third machine learning model) at a stage of a method for training individual machine learning model, i.e., generation of the model 131, executed by the generation device. The method for training individual model having the structure shown in FIG. 3 will be described below with reference to FIG. 9. The following description is common concerning the generation of machine learning models such as the first, second, and third machine learning models. Thus, in the description, the machine learning models such as the first, second, and third machine learning models or machine training data sets are simply referred to as "learning model" or "training data set", without distinguishing the machine learning models from each other or the machine training data sets from each other.

First, a training data set for training individual machine learning model is prepared (step S11). The training data set is data including a plurality of data pairs each consisting of a combination of data (hereinafter also referred to as "first data") generated from a microscopic image of a rubber composition captured with a microscope and ground truth data (second data). The first data may be a microscopic image itself with a predetermined size of H × W or may be a patch image with a predetermined size of H × W cut out from the microscopic image. The microscopic image encompasses microscopic images of a plurality of rubber compositions which differ in, for example, formulation (at least one of the types and component ratio of the components) or kneading conditions. In the present embodiment, magnification of the microscope for a microscopic image is fixed regardless of the image. Yet, the magnification of the microscope may be different depending on the image. Furthermore, for example, a plurality of microscopic images which are captured at different magnifications or which are captured at different regions may be included for the same rubber composition. The microscope to capture the image of the rubber composition is as described above concerning the input data to the model 131.

The ground truth data is data defining regions corresponding to respective components of the rubber composition appearing in the first data. In other words, the ground truth data is data obtained by labeling (annotating) all the pixels of the first data to indicate which texture of a component corresponds each region and which region each pixel belongs to. The number of labels can be the number of types of components of the rubber composition that appear in the microscopic image. The annotation can be performed by a known method, provided that the region division of the first data as a reference of the annotation does not cause gradation in the brightness of boundary pixels between different island structures, and such boundary pixels are assigned with labels corresponding to certain components. Therefore, the annotation preferably reflects labeling by a person skilled in observing rubber compositions. Thus, the ground truth data better conforms to conventional knowledge.

The prepared training data is taken into the analysis device 1 via a storage medium or a network, and stored, as a training data set 134, in the storage unit 13 by the learning unit 10D. The training data set 134 is separated into training data for parameter adjustment and test data for accuracy verification, and then the learning unit 10D stores the separated data. A ratio between the two data can be appropriately set.

Subsequently, the learning unit 10D divides the training data into a predetermined number of pieces of data to form a plurality of subsets (step S12). The predetermined number is the number of pieces of data input to the machine learning model per one time in the next step S13 and can be appropriately set.

Subsequently, the learning unit 10D selects one of the subsets, inputs the first data included in the selected subset to the machine learning model and derives output data from the machine learning model (step S13). The output data is data corresponding to the ground truth data combined with the input first data. In the present embodiment, it is data in which regions corresponding to the respective components are defined. In step S13, in each convolution layer, batch normalization processing may be introduced after the convolution operation and before application of the ReLU function. This facilitates the stabilization and acceleration of the learning.

Subsequently, the learning unit 10D adjusts the parameters so that a value of an error function between the output derived in step S13 and the ground truth data combined with the first data input in step S13 is minimized (step S14). Examples of the error function include a cross entropy error function. The learning unit 10D adjusts and updates the parameters of the linear projection matrix of the machine learning model, the T encoder, the bias in each convolution layer, the convolution filter, and the like according to, for example, a stochastic gradient descent method.

Subsequently, the learning unit 10D determines whether or not learning of one epoch is completed (step S15). In the present embodiment, for each subset created in step S12, the learning of one epoch is determined to be completed when one cycle of steps S13 and S14 finishes. In a case where the learning of one epoch is not determined to be completed (NO), the learning unit 10D repeats steps S13 to S14 using a subset that is not yet used. Conversely, in a case where the learning of one epoch is determined to be completed (YES), step S16 is executed.

In step S16, the learning unit 10D determines whether or not learning of all epochs is completed. The total number of epochs is not limited and can be appropriately set. In a case where the learning of all epochs is not determined to be completed (NO), the learning unit 10D repeats steps S13 to S15 while selecting subsets in the same order as the previous epoch. On the other hand, in a case where the learning of all epochs is determined to be completed (YES), the learning unit 10D stores the latest parameters in the storage unit 13. Thus, through the above procedure, individual machine learning model having undergone supervised learning is generated. For example, the supervised learning can be carried out according to a model belonging to a category of semantic segmentation described later, or according to a model other than those belonging to the above-described categories.

Further, in the present embodiment, in order to increase the accuracy of the output data from individual machine learning model, the learning unit 10D may further execute semi-supervised learning. For example, a model after the completion of the supervised learning and before the completion of the semi-supervised learning may be distinguished and referred to as "provisional model". The semi-supervised learning will be described below.

Subsequently, the learning unit 10D inputs first data of the verification data to a provisional model and derives output data corresponding to the ground truth data combined with the input first data from the provisional model (step S17).

Subsequently, the learning unit 10D calculates an error of the output data derived in step S17 with respect to the ground truth data (step S18). The method of calculating the error is not limited and can be performed according to a known method.

Subsequently, the learning unit 10D specifies first data which is included in the verification data and has a relatively small error calculated in step S18 (step S19). The learning unit 10D may specify first data which is included in the verification data and in which, based on a predetermined threshold, the calculated error is not more than or less than the threshold. Alternatively, the first data having a relatively small error may be specified among the output data derived from the provisional model in step S16. The first data specified here is preferably data for which appropriate region division by the provisional model is considered to be relatively difficult. The accuracy of an individual machine learning model can be further improved by using similar data described later. The similar data is data which is similar to the first data and has a relatively small error with respect to the ground truth data and for which region division by the provisional model is relatively highly difficult.

Next, similar data having the same size as the first data specified in step S19 and having a high degree of similarity to the first data is prepared (step S20). The similar data may be, for example, data that is generated from a microscopic image of the rubber composition and is not included in the training data prepared in step S11. A method of determining the degree of similarity to the first data is not limited. For example, data having a brightness distribution closer to that of the first data can be prepared as similar data. Unlike the first data, the similar data is not combined with the ground truth data. The learning unit 10D takes similar data into the analysis device 1 via a storage medium or a network, and stores the similar data in the storage unit 13.

Subsequently, the learning unit 10D inputs the similar data to the provisional model to derive output data from the provisional model (step S21).

Subsequently, the learning unit 10D sets the derived output data as pseudo ground truth data and combines the pseudo ground truth data with the original similar data to create pseudo training data (step S22). The created pseudo training data is stored in the storage unit 13 similarly to the training data.

The learning unit 10D further continues training of the provisional model using the pseudo training data created in step S22 (step S23). Specifically, in the following processing, processing similar to steps S12 to S16 is performed on the combined data of the pseudo training data and the training data, and the parameters of the provisional model are further adjusted. It is thus possible to generate a highly accurate individual machine learning model applicable to the input data with a higher degree of difficulty in region division than the provisional model. The learning of the provisional model may be ended without waiting for completion of the learning of all epochs when the error is reduced to some extent and the learning is stabilized.

Steps S11 to S23 shown in the flowchart in FIG. 9 and the above-described process for generating the model 131 are each a computer-implemented step that is accomplished through the reading of the program 132 in the program storage unit 13 by one or a plurality of processors constituting the control unit 10 and thereby executing the information processing operations in the acquisition unit 10A, the output derivation unit 10B, the feature amount derivation unit 10C, and the learning unit 10D using a physical computer.

### <6-1. Optimization of learning model>

The method for generating individual learning model is explained in the above description <5>. Optimization of a learning model will be described below. Generally, the number of training data pairs to serve as training data needs to be increased to improve the accuracy of output from a learning model. To this end, preparation of a large number of ground truth data (output data) is necessary as described above, and the preparation takes time. Thus, optimization of learning models is performed in the present embodiment as described below.

In a mode of the present embodiment, the optimization is performed as follows.
(1) A first learning model group including a plurality of learning models is generated. Here, the plurality of learning models included in one learning model group have been trained using respective different training data sets. For example, 20 to 60 training data pairs are preferably included in individual training data set used to generate individual learning model. Moreover, in the present disclosure, an initial learning model is preferably generated using a training data set including 20 to 40 training data pairs.

A different training data set is prepared by inputting a sample image to a learning model having been trained using one of training data sets and then adding or deleting a training data pair included in one of the training data sets in order to improve the expression of a component that is inaccurately expressed in output data from the learning model. The phrase "inaccurately expressed" in output data from the learning model means that the degree of consistency is less than 70% between the region of the component expressed in the output data and the region of the component expressed in ground truth data generated from the sample image. Here, a segment for validating the region of each component is desirably set in both data. The degree of consistency is calculated based on the area and shape of the component in the validation segment. The validation segment is preferably set for each component which is a target of the validation. Also, one or more validation segments are preferably set for each component.

Individual learning models used to generate a first learning model group including a plurality of learning models are generated by <5. Method for training individual learning model> described above.

In generation of the first learning model group, when training data pairs included in one of training data sets are added or deleted to prepare a different training data set, less than 25% of the training data pairs included in the original training data set are preferably changed. For example, when the original training data set includes 40 training data pairs, 10 or less data pairs are preferably deleted or added.

For example, in the case of using a certain learning model, when the input data expresses a plurality of separated NR but the separated NR are integrally expressed in output data, NR is considered to be excessively expressed in an area between the separated NR. In response to this issue, for example, a training data pair showing a lot of NR portions is deleted or a training data pair accurately expressing even a small NR portion is added. In this manner, different training data sets are prepared, and learning models trained using the data set are generated.

Next, a sample image based on the microscopic image is input to the learning models, and the learning models deliver output data. Thereafter, the output data from the learning models are compared with each other to select one of the learning models that can most accurately express the component with respect to the sample image (corresponding to the first evaluation standard in the present invention).

The evaluation technique in comparing learning models within a single model group may be sensory evaluation by human visual inspection of the sample image and the output data from each learning model. Alternatively, the evaluation may be performed by setting a segment to validate a region corresponding to a component in ground truth data generated from a sample image and a region corresponding to the component in output data from each learning model and then calculating the equivalence of the area and shape of the component between the validation segments. Also, these techniques may be combined to perform overall evaluation. The validation segment that is set for the evaluation of the learning models may be the same as or different from a validation segment that is set to prepare another training data set from a training data set for generating a learning model and it is preferably the same.

(2) Subsequently, a second learning model group is generated. In order to generate the second learning model group, a plurality of training data sets are generated based on the training data set used for the learning model selected in the process (1). The generation method is as described in the process (1) and mainly includes addition or deletion of training data pair(s) included in the training data set selected in consideration of inaccurately expressed component(s) (corresponding to the first criterion in the present invention).

For example, in generating the second learning model group, a plurality of training data sets used to generate the second learning model group can be prepared by adding data pair(s) similar to one of more of the data pairs in which semantic segmentation was unsuccessful in the first learning model group generated in the process (1) or by deleting one or more data pairs in which contradiction was confirmed in the segmentation. Alternatively, for example, in generating the second learning model group, a training data pair may be added which is obtained by image-capturing with a different sensitivity from that used to obtain the training data pairs included in the training data set used to generate the learning model selected in the process (1).

Then, the prepared plurality of training data sets are used to generate learning models. A sample image is input to the learning models to obtain output data therefrom. Subsequently, the output data from the learning models are compared to each other to select one of the learning models that can most accurately express the components with respect to the sample image (corresponding to the second evaluation standard in the present invention).

(3) A final learning model can be obtained through the processes (1) and (2). Moreover, a learning model capable of outputting more accurate output data can be obtained by repeating the processes (1) and (2).

The number of learning models included in each learning model group is not limited, and one or more learning models may be sufficient.

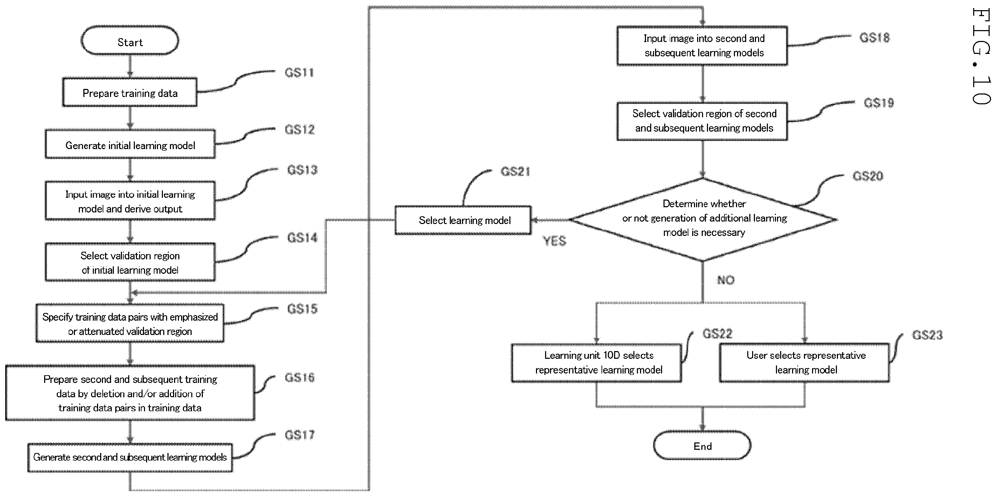

For example, the generation of one learning model group including a plurality of learning models and selection of one of the plurality of learning models are executed through the following steps. FIG. 10 shows a flowchart including generation of a learning model group including a plurality of machine learning models executed by a generation device and selection of one of the plurality of machine learning models. The flow will be described with reference to FIG. 10.

A first learning model group will be described below as an exemplary learning model group. A second learning model group can also be obtained by the same generation method. A training data set 1A is prepared to generate an initial learning model such as a first learning model A (step GS11). The training data set 1A is taken into the analysis device 1 via a storage medium corresponding to the acquisition unit 10A or a network and stored, as a training data set 134, in the storage unit 13 by the learning unit 10D. Subsequently, the learning unit 10D executes steps S12 to S23 in <5. Method for training individual learning model> described above, thereby generating a first learning model A as an initial learning model (step GS12).

Next, the learning unit 10D inputs a sample image 1 based on a microscopic image, which is verification data, into the first learning model A as an initial learning model to derive output data 1A corresponding to the input sample image from the first learning model A as an initial learning model (step GS13). Thereafter, the learning unit 10D calculates an error of the output data 1A derived in step GS13 with respect to the ground truth data combined with the input sample image in step GS13 in each predetermined region, and selects a region with a large error as a validation region (step GS14). Calculation of an error may be performed by any technique including a known technique.

Subsequently, the learning unit 10D identifies a training data pair including ground truth data that is a basis for an error (emphasis or attenuation at a portion corresponding to the validation region in the ground truth data) with respect to the ground truth data in the validation region (step GS15). The training data pair specified in step GS15 is a training data pair included in the training data set used in step GS11.

Subsequently, the learning unit 10D deletes and/or adds the training data pair specified in step GS15 to prepare a training data set 2 (step GS16). In step GS16, a training data pair including ground truth data with suppressed emphasis or attenuation in the validation region selected in step GS14 is selected from training data pairs that are taken into the analysis device 1 via the acquisition unit 10A and stored, as a training data set 134, in the storage unit 13 by the learning unit 10D and are not used in step GS 11. The selected training data pair is added to the training data set 2. Accordingly, the training data pair specified in step GS15 can be added. In step GS16, the second training data and subsequent training data are prepared by deleting a training data pair deviating from the validation region selected in step GS14 regarding the ground truth data of the sample image 1 and/or by adding a training data similar to the validation region. The training data pair to be deleted or added can be selected according to the viewpoint of an allowable error range in the validation region which is preliminary input, or may be selected based on the viewpoint input by a user.

Subsequently, the learning unit 10D executes steps S12 to S23 in <5. Method for training individual learning model> described above using the training data set 2 obtained in step GS 16, thereby generating a second learning model (first learning model B) (step GS17).

Next, the learning unit 10D inputs a sample image 1 based on a microscopic image, which is verification data, into the second learning model (first learning model B) to derive output data corresponding to the input sample image from the second learning model (first learning model B) (step GS18). Thereafter, the learning unit 10D calculates an error of the output data derived in step GS17 with respect to the ground truth data combined with the input sample image 1 in step GS17 in each predetermined region, and selects a region with a large error as a validation region (step GS19).

Subsequently, the learning unit 10D comprehensively compares an error between the ground truth data of the sample image 1 and the output data A1 derived in step GS13 and an error between the ground truth data of the sample image 1 and the output data B1 derived in step GS17, and determines whether it is necessary to generate an additional learning model (step GS20). In the present embodiment, if there is a comparable difference between the error between the ground truth data of the sample image 1 and the output data A1 derived in step GS13 and the error between the ground truth data of the sample image 1 and the output data B1 derived in step GS17, generation of an additional learning model is determined to be unnecessary (NO). The presence or absence of a comparable difference can be set based on a threshold or other factors input by a user.

In a case where the generation of an additional learning model is determined to be necessary (Yes), the learning unit 10D selects any one of the existing learning models (the first learning model A and the first learning model B for the generation of a third learning model) (step GS21), then executes the above-described steps GS15 and GS16 on the training data sets used in the selected leaning model to prepare a training data set, thereby generating an additional learning model (step GS17), and repeats steps GS15 to GS21.

Conversely, in a case where the generation of an additional learning model is determined to be unnecessary (No), the learning unit 10D executes subsequent step GS22 or GS 23.

Subsequently, the learning unit 10D comprehensively compares the error between the ground truth data of the sample image 1 and the output data A1 derived in step GS13 and the error between the ground truth data of the sample image 1 and the output data B1 derived in step GS17 based on an evaluation standard to select a representative learning model (step GS22).

Next, the user comprehensively compares the ground truth data of the sample image 1, the output data A1 derived in step GS13, and the output data B1 derived in step GS17 based on an evaluation standard to select a representative learning model (step GS23).

The user can select which technique, step GS22 or step GS23, is used to determine the learning model. The evaluation standard in step GS22 or step GS23 may be set for each learning model group. Alternatively, a common evaluation standard may be set for a plurality of model groups.

Subsequently, the learning unit 10D stores the selected learning model in the storage unit 13 as a representative learning model selected from one learning model group.

A next learning model group using the representative learning model selected from the one learning model group including a plurality of learning models, i.e., a second learning model group, can be generated by applying the representative learning model obtained from the foregoing learning model group into step GS12 in the flowchart (FIG. 10) including generation of one learning model group including a plurality of learning models and selection of one of the plurality of learning models, and then executing steps GS13 to GS21. The sample images used to construct the second learning model group and subsequent learning model groups each may be the same as or different from the sample image 1 used to construct the first learning model group.

The technique for selecting a representative learning model from the second learning model group is the same as the technique used in step GS22 or step GS23.

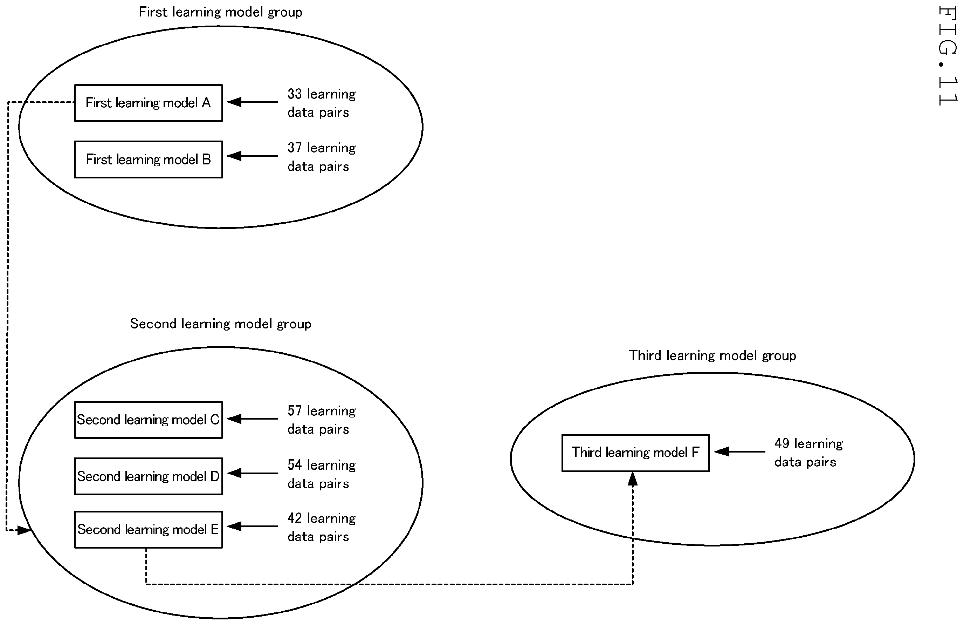

Next, specific examples of processing in the processes (1) and (2) will be described below with reference to FIG. 10 and FIG. 11.

### <1. Generation of first learning model group>

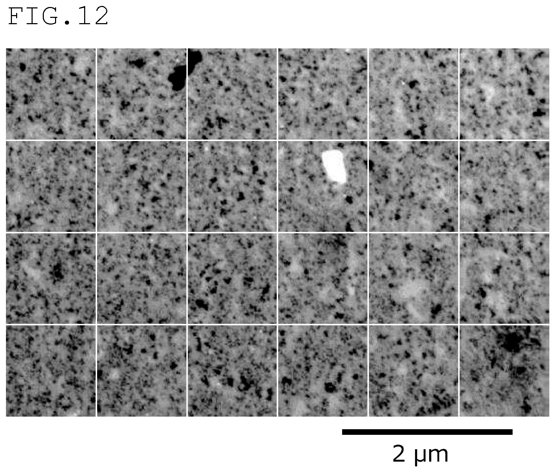

First, a plurality of microscopic images each as shown in FIG. 1 are prepared as training data sets. Each microscopic image is divided into 24 sections as shown in FIG. 12. In other words, 24 patch images are created from one microscopic image. A plurality of microscopic images each of which can be cut into such a plurality of patch images are prepared. Next, correct answer images (ground truth data) corresponding to respective patch images are prepared as described above. In other words, training data sets each consisting of a combination of a patch image and a corresponding correct answer image are generated. The following will describe a case where some of the prepared training data pairs are selected to generate a training data set, and the training data set is used to train a learning model. Here, the training data set that is a combination of the patch image and a corresponding correct answer image may be generated by obtaining microscopic images via the acquisition unit 10A and then generating a patch image in the learning unit 10D of the control unit 10, or alternatively by obtaining a patch image of microscopic images via the acquisition unit 10A.

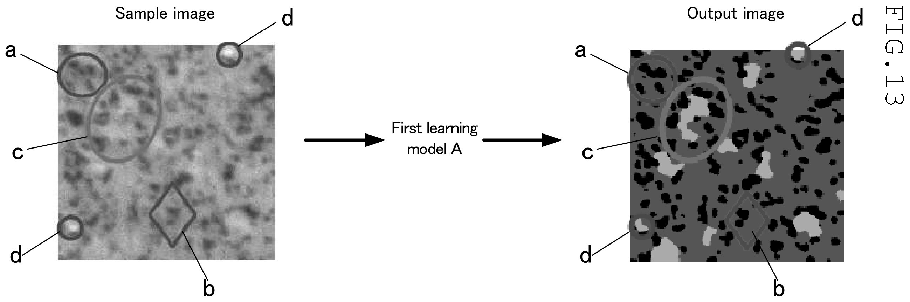

First, in order to generate a first learning model A, a first training data set A including 33 training data pairs is prepared (step GS11). A learning model is trained using the first training data set A to generate a trained first learning model A (step GS12). Next, a sample image shown in FIG. 13 is input to the trained first learning model A, and this model outputs an output image (step GS13). FIG. 13 shows an output image obtained when inputting the sample image to the trained first learning model A.

As shown in FIG. 13, comparison portions are preliminarily set in the sample image and the output image. The portion a is a portion where CB appears. The portion b is also a portion where CB appears. The portion c is a portion where NR appears. The portion d is a portion where ZnO appears. Here, with regard to the portion c, NR in the portion c in the sample image is vertically separated, while NR in the portion c in the output image is integrally defined. NR appearing in the portion c is significantly erroneous with respect to the ground truth data, and the region of NR appearing in the portion c is selected as a validation region (step GS14). In order to separate NR in the portion c, a training data pair is supplied that is not used in the first training data set A and includes a correct answer image in which NR in the portion c is separated, thereby preparing a new first training data set B (step GS16). Then, the new first training data set B is used to generate a first learning model B (step GS17).

Specifically, the first training data set B including 37 training data pairs is obtained by newly adding four training data pairs to the first training data set A including 33 training data pairs. The additional training data pairs are not included in the first training data set A. As described above, separation of NR is inaccurately expressed in the case of the first learning model. Thus, the four pairs added are selected because both the input data (patch image) and the output data (correct answer image) of each of the four pairs express separated NR.

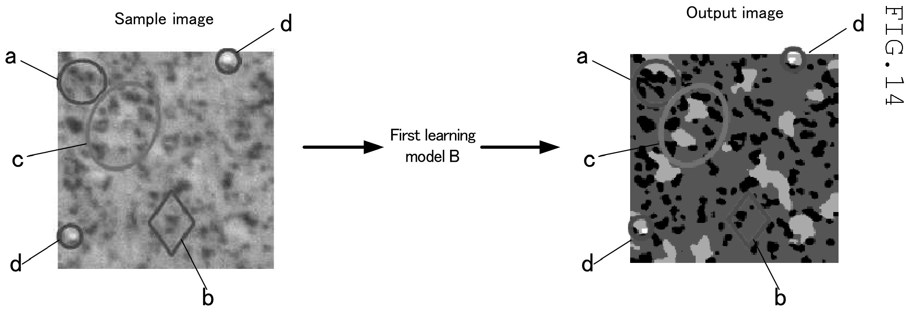

A learning model is trained using the first training data set B to generate a trained first learning model B (step GS17). Next, the same sample image is input to the trained first learning model B, and this model outputs an output image (step GS18). FIG. 14 shows an output image obtained when inputting the sample image to the trained first learning model B. In each predetermined region, an error with respect to the ground truth data combined with the input sample image in step GS17 is calculated. Then, a region with a large error is selected as a validation region (step GS19).

Next, comprehensive comparison is performed on an error between the output data A1 derived in step GS13 and the ground truth data of the sample image and an error between the output data B1 derived in step GS17 and the ground truth data of the sample image 1. Since a comparable difference was found, generation of an additional learning model is determined to be unnecessary (NO) (step GS20).

As described above, two learning models are generated for the first learning model group. Next, one of the two learning models is selected. As shown in FIG. 14, separation of NR is expressed in the output image from the first learning model B. Yet, the first learning model A is selected as a representative learning model of the first learning model group (step GS23) because the accuracy of the output image from the first learning model A with respect to the sample image is determined to be higher than that of the output image from the first learning model B based on overall judgement taking the other portions into consideration.

### <2. Generation of second learning model group>

Next, a second learning model group is generated based on the first learning model A selected from the first learning model group (step GS12). As described above, separation of NR in the portion c is inaccurately expressed in the case of the first learning model A. Specifically, NR is excessively expressed. Moreover, ZnO in the portion d in the output data is inaccurately expressed in the case of the first learning model A (step GS14, step GS15). In the second learning model group, from the above two points of view, training data pairs expressing NR and ZnO well are added to prepare a second training data set (step GS16). The second training data set is obtained by adding the same four training data pairs as those added in the first training data set B and additional 20 training data pairs to the first training data set A including 33 training data pairs. The additional 20 training data pairs are not included in the first training data sets A and B. The additional 20 training data pairs are each specifically a training data pair in which the indices of both the sensitivity to NR and the sensitivity to ZnO are set to be higher than those in each training data pair included in the first training data set A.

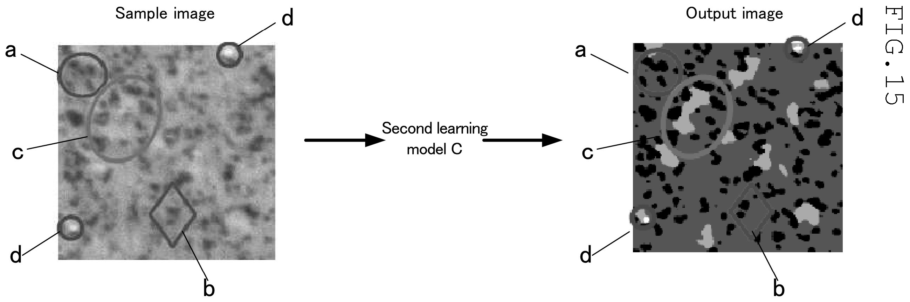

A learning model is trained using a second training data set C including all the 57 training data pairs of the second training data set to generate a trained second learning model C (step GS17). Next, the same sample image is input to the trained second learning model C, and this model outputs an output image (step GS18). FIG. 15 shows an output image obtained when inputting the sample image to the trained second learning model C.

The output image from the second learning model C in FIG. 15 expresses ZnO well. Still, NR is not separated in the output image (step GS19, step GS20, step GS21). Thus, a second training data set D including 54 training data pairs is newly prepared. The second training data set D including 54 training data pairs is obtained by deleting four training data pairs from the second learning model C including 57 training data pairs (step GS15, step GS16). The deleted four training data pairs are not included in the first training data sets A and B. The selected four training data pairs do not express separated NR well.

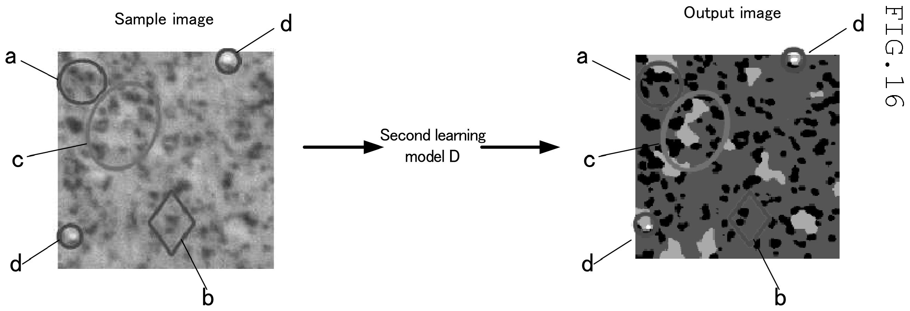

A learning model is trained using the second training data set D to generate a trained second learning model D (step GS17). Next, the same sample image is input to the trained second learning model D, and this model outputs an output image (step GS18). FIG. 16 shows an output image obtained when inputting the sample image to the trained second learning model D.

In FIG. 16, the area of NR in the portion c in the output image from the second learning model D is smaller than that of the second learning model C. Still, NR is not separated in the output image (step GS19, step GS20, step GS21). Thus, a second training data set E including 42 training data pairs is newly prepared. The second training data set E including 42 training data pairs is obtained by deleting 12 training data pairs from the second training data set D including 54 training data pairs (step GS15, step GS16). Four of the 12 deleted training data pairs are different from the training data pairs in the training data sets B to D, and the other eight deleted data pairs are different from the training data pairs in the training data sets C and D. The 12 training data pairs are selected because they do not express separated NR well. Specifically, the second training data set E includes 21 of the 33 training data pairs in the first training data set A and also includes 29 of the 37 training data pairs in the first training data set B.

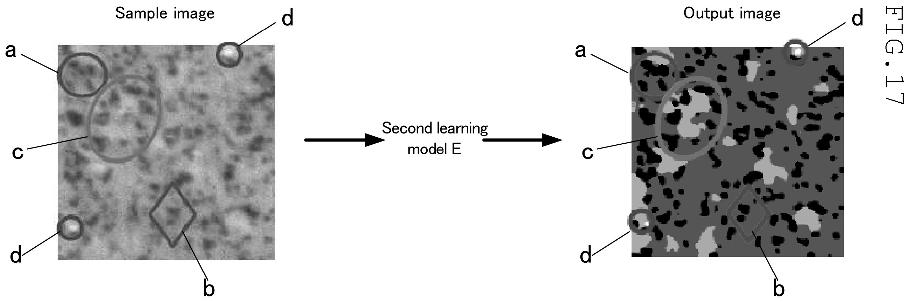

A learning model is trained using the second training data set E to generate a trained second learning model E (step GS17). Next, the same sample image is input to the trained second learning model E, and this model outputs an output image (step GS18). FIG. 17 shows an output image obtained when inputting the sample image to the trained second learning model E.

In FIG. 17, the area of NR in the portion c in the output image from the second learning model E is larger than that in the output image from the second learning model D, and also NR is not separated.

As described above, three learning models C to E are generated for the second learning model group. Since they are comparable, generation of additional learning models is not performed (GS20). Next, one of the three learning models is selected. Specifically, the second learning model E is selected (step GS23) by overall judgement including comparison of the output data from the three learning models based on the evaluation standard.

### <3. Generation of third learning model group>

Next, a third learning model group is generated based on the second learning model E (step GS12) selected from the second learning model group. As described above, separation of NR in the portion c is inaccurately expressed in the case of the second learning model E (steps GS13 to GS15). Thus, to inhibit the excessive expression of NR, a third training data set F including 49 training data pairs is prepared for the third learning model group (step GS16). The third training data set F including 49 training data pairs is obtained by adding seven training data pairs to the second training data set E including 42 training data pairs. The added seven training data pairs include two new data pairs which are not included in the training data sets A to E. The added seven training data pairs are selected because they do not excessively express NR (accurately express separated NR). Specifically, the selected training data pairs have a higher sensitivity to NR than the training data pairs included in the first training data set A and a lower sensitivity to NR than the training data pairs included in the second training data set E, and can express separated NR well.

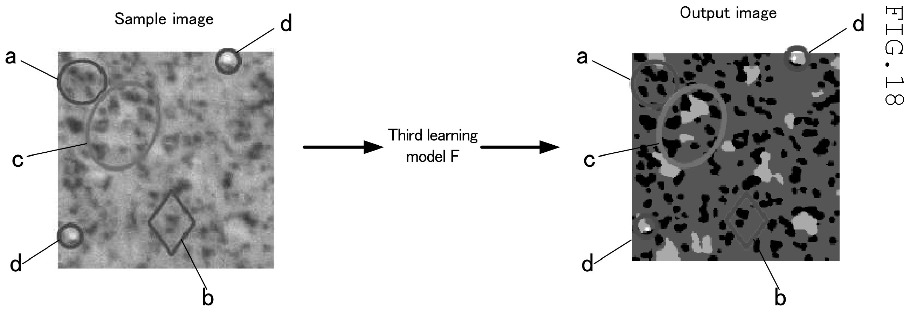

A learning model is trained using the third training data set F to generate a trained third learning model F (step GS17). Next, the same sample image is input to the trained third learning model F, and this model outputs an output image (step GS18). FIG. 18 shows an output image obtained when inputting the sample image to the trained third learning model F.

In FIG. 18, separated NR is well expressed in the output image from the third learning model F. The other parts of the image also express the contained components well with respect to the sample image. Therefore, the third learning model F is employed as a final learning model (step GS20, step GS23).

### <Feature>

Generation of a learning model in the present embodiment includes preparing a plurality of training data sets through addition or deletion of training data pairs to or from training data set(s) in consideration of inaccurately expressed components. Further, a plurality of learning model groups are generated, and then the best learning model is employed among the learning models included in the learning model groups. Thus, a learning model that can output accurate output data can be obtained without using a large number of training data sets.

For example, total six learning models are generated in the above-described three learning model groups while using total 59 training data pairs. In the case of generating a learning model using a training data set including 160 training data pairs without addition or deletion of training data pairs described above, the obtained output data was equivalent to the output data from the third learning model F. Thus, generation of a learning model through the above procedure can significantly reduce the number of training data pairs. Consequently, the workload to prepare training data sets can be reduced.

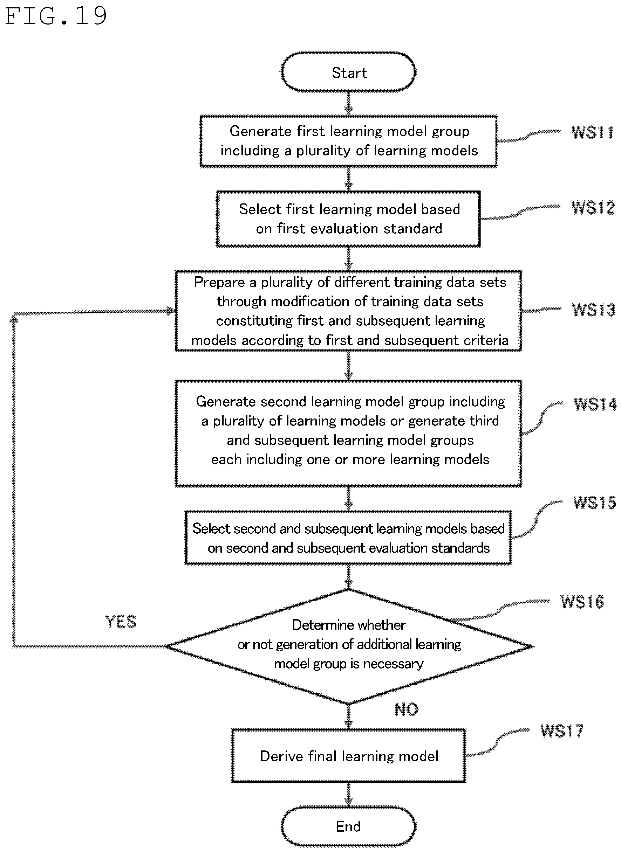

One embodiment of the present invention is described above. The present invention is not limited to the above-described method of sequentially generating a plurality of learning models starting from one learning model and generating a learning model B from a learning model A, and generating a learning model C from the learning model B. Other embodiments are described using the flowchart shown in FIG. 19.

As shown in FIG. 19, the method for generating a learning model may include preparing a first learning model group that includes a plurality of learning models generated based on a plurality of training data sets (step WS11), selecting a first learning model from the first learning model group based on a first evaluation standard (step WS12), preparing a plurality of training data sets with different content through modification of the training data sets constituting the one learning model according to a first criterion (step WS13), generating a second learning model group including a plurality of learning models (step WS14), selecting a second learning model based on a second evaluation standard (step WS15), determining whether or not generation of an additional learning model group is necessary (step WS16), and, if generation of an additionally learning model group is unnecessary (NO), deriving a final learning model (step WS17).

In the method for generating a learning model shown in FIG. 19, a plurality of different training data sets are taken into the analysis device 1 via the acquisition unit 10A, and the learning unit 10D executes steps S12 to S23 in <5. Method for training individual learning model> described above on each training data set, thereby generating a first learning model group including a plurality of learning models (step WS11).

The selection of a first learning model based on a first evaluation standard (step WS12) is performed as in step GS22 or GS23 described above.

The preparation of a plurality of training data sets through modification of the training data sets constituting the selected first learning model according to a first criterion (step WS13) is performed as in steps GS13 to GS16 described above. Then, instead of generating a training data set, a plurality of different training data sets are generated by changing the training data pairs to be deleted from or added to the training data sets constituting the first learning model.

The generation of a second learning model group including a plurality of learning models (step WS14) is completed by executing steps S12 to S23 in <5. Method for training individual learning model> described above using the plurality of different training data sets generated in step WS13.

The selection of a second learning model based on a second evaluation standard (step WS15) is performed as in step GS22 or GS23 described above.

The determination of whether or not generation of an additional learning model group is necessary (step WS16) is performed as in steps GS18 to GS20 described above.

If generation of an additionally learning model group is unnecessary (NO), a final learning model is derived by the output derivation unit 10B (step WS17).

### <6-2. Modification example of optimization of learning model>

One embodiment of the present invention has been described above. The present invention is not limited to the embodiment and may be modified without departing from the gist of the present invention. For example, a learning model may be optimized through two or more stages of model generation without generating a learning model group as described below.

For example, the method for generating a machine learning model according to an embodiment of the present invention includes:
preparing a first training data set including a plurality of training data pairs to perform machine learning, the machine learning including inputting input data generated from a microscopic image showing a plurality of components contained in a rubber composition and outputting output data defining regions corresponding to the respective components appearing in the microscopic image;
preparing a first machine learning model having been trained using the first training data set;
first evaluation involving evaluating the consistency between output data output when inputting sample data to the first machine learning model and ground truth data corresponding to the sample data concerning three or more components;
selecting a component for which the consistency is determined to be low in the first evaluation;
preparing a second training data set by deleting, from the first training data set, at least one training data pair with a low consistency for the selected component and/or adding, to the first training data set, at least one new training data pair with a high consistency for the selected component;
preparing a second machine learning model having been trained using the second training data set; and
second evaluation involving evaluating the consistency between output data output when inputting sample data to the second machine learning model and ground truth data corresponding to the sample data concerning three or more components.

The consistency between the output data and the ground truth data in the first evaluation and the second evaluation is preferably evaluated while setting a validation segment to validate a region corresponding to each component. In each evaluation, preferably, the consistency is determined to be low when the degree of consistency between the output data and the ground truth data in the validation segment is less than 70%.

In the method for generating a machine learning model of the present embodiment, a series of "selecting a component for which the consistency is determined to be low in the first evaluation, preparing a second training data set, preparing a second machine learning model and performing the second evaluation" is preferably repeated until the consistency between the output data and the ground truth data for none of the components is determined to be low in the final evaluation.

Specifically, the method for generating a machine learning model of the present embodiment preferably includes repetition of a series of operation including "selecting a component for which the consistency is determined to be low, preparing a new training data set by deleting at least one training data pair with low consistency for a component selected in the immediately preceding evaluation and/or adding at least one new training data pair with high consistency for the selected component, preparing a new machine learning model having been trained using the new training data set, evaluating the consistency between output data output when the sample data is input to the new machine learning model and the ground truth data corresponding to the sample data concerning three or more components" until the consistency between the output data and the ground truth data for none of the components is determined to be low in the final evaluation.

According to the present embodiment described above, in training data set preparation steps after the preparation of the second training data set, training data pairs are selected while focusing on the region of a component for which the consistency (degree of consistency) is low when using the machine learning model obtained in the immediately preceding preparation step, and then deleting or adding the selected training data pairs. Thus, the embodiment enables efficient generation of a highly accurate machine learning model as compared to the case of randomly selecting training data pairs included in machine training data sets.

In the training data set preparation steps after the second training data set preparation step, preferably, a training data pair that relates to a component for which the consistency is determined to be low in the first evaluation or an immediately preceding evaluation is added. More preferably, a new training data pair is added which has been prepared with a different sensitivity from the training data pairs included in the first to the immediately preceding training data set and can well express the component for which the consistency is determined to be low.

In the training data set preparation steps after the second training data set preparation step, preferably, a training data pair that relates to a component for which the consistency is determined to be low in the first to an immediately preceding evaluation is deleted, while retaining a training data pair for which the consistency is determined to be satisfactory. The training data pair that relates to a component for which the consistency is determined to be low is preferably a training data pair with a particularly low degree of consistency, for example, less than 50%.

For example, as clearly confirmed from the microscopic image in FIG. 1 or FIG. 12, the microscopic image showing a plurality of components contained in a rubber composition includes a zinc oxide (ZnO) region with a relatively high brightness, a carbon black (CB) region with a relatively low brightness, and styrene-butadiene rubber (SBR) and natural rubber (NR) regions each with a brightness between the brightnesses of the ZnO region and the CB region. Irrespective of changes to the formulation of the components in the rubber composition, a microscopic image captured with an electron microscope depicts at least one of the components by differences in pixel brightness. Therefore, a training data pair consisting of a combination of data generated from a microscopic image of the rubber composition captured with a microscope and data relating to an image defining regions corresponding to the components appearing in the microscopic image has, for example, a tendency that setting a high sensitivity for a ZnO region with a relatively high brightness makes the ZnO region appear larger in the training data pair and makes a NR region with a relatively high brightness within the intermediate brightness range indistinct. On the other hand, setting a high sensitivity for a CB region with a relatively low brightness tends to make the CB region appear larger in the training data pair and tends to make a SBR region with a relatively low brightness within the intermediate brightness range indistinct. In this case, the ZnO region tends to be invisible.

Therefore, in order to generate a trained model capable of appropriately defining the regions of components in a rubber composition in a microscopic image of the rubber composition by conventional methods, preparation of a significant number of training data pairs for various sensitivities is necessary. In contrast, the method for generating a machine learning model of the present embodiment includes generating a machine learning model based on a training data set including a small number of training data pairs, inputting sample data to the generated machine learning model to allow the model to deliver output data, and comparing the output data with ground truth data corresponding to the sample data to select and retain necessary training data pairs or select and delete unnecessary training data pairs for a training data set. Thus, the method enables generation of a highly accurate machine learning model even using a training data set including fewer training data pairs.

One embodiment of the present invention has been described above. The present invention is not limited to the embodiment and may be modified without departing from the gist of the present invention. The essences of the above descriptions <6-1. Optimization of learning model> and <6-2. Modification example of optimization of learning model> may be appropriately combined.

For example, in the stepwise optimization of learning models, first, one training data set may be prepared to generate one learning model and then a plurality of training data sets may be prepared and optimized for each immediately preceding learning model at the second or subsequent stages to generate a plurality of learning models. In this case, each optimized learning model may be selected from one group including a plurality of learning models. Alternatively, an optimized learning model may be obtained by preparing one training data set at the third or subsequent stages to generate a learning model and optimizing the learning model.

For example, the method for generating a machine learning model according to an embodiment of the present invention includes:
preparing a first training data set including a plurality of training data pairs to perform machine learning, the machine learning including inputting input data generated from a microscopic image showing a plurality of components contained in a rubber composition and outputting output data defining regions corresponding to the respective components appearing in the microscopic image;
preparing a first machine learning model having been trained using the first training data set;
first evaluation involving evaluating the consistency between output data output when inputting sample data to the first machine learning model and ground truth data corresponding to the sample data concerning three or more components;
selecting a component for which the consistency is determined to be low in the first evaluation;
preparing a plurality of second training data sets with different content by deleting, from the first training data set, at least one training data pair with a low consistency for the selected component and/or adding, to the first training data set, at least one new training data pair with a high consistency for the selected component;
preparing a plurality of second machine learning models respectively having been trained using the respective plurality of second training data sets;
comparing output data from the second machine learning models with each other to select one of the second machine learning models based on a second evaluation standard; and
second evaluation involving evaluating the consistency between output data output when inputting sample data to the selected one second machine learning model and ground truth data corresponding to the sample data concerning three or more components.

As described above, the essences of the above descriptions <6-1. Optimization of learning model> and <6-2. Modification example of optimization of learning model> are appropriately applied to the case including a stage of generating one learning model from one training data set and a stage of generating one model group from a plurality of learning models which are generated from a plurality of training data sets.

### <7. Other modification examples>

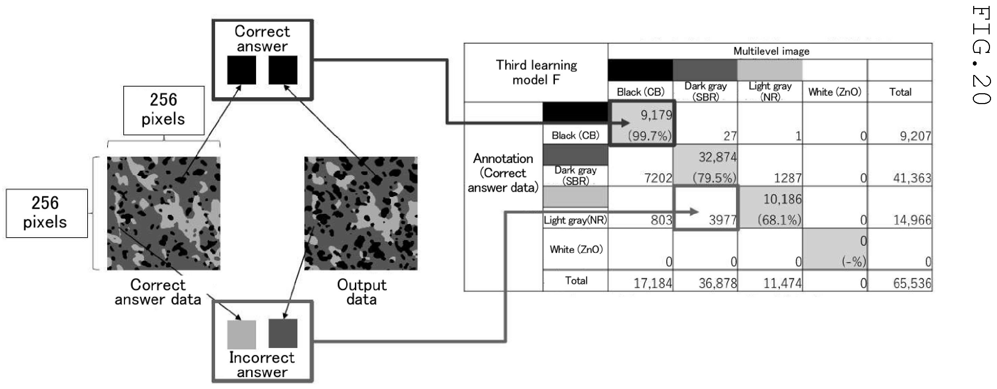

One embodiment of the present invention has been described above. The present invention is not limited to the embodiment and may be modified without departing from the gist of the present invention. The gist of the following modification examples can be appropriately combined. Alternatively, the embodiments may be combined.
(1) In the analysis device 1 according to the above embodiment, a model based on the TransUNet model is used as the model 131, but the structure of the model 131 is not limited thereto. The model 131 may be, for example, a model belonging to a category of semantic segmentation, such as a model based on an attention network, SegNet, a full-layer convolutional network (FCN), a feature pyramid network, PSPNet, RefineNet, a recurrent neural network (RNN)-based model, UNet, USegnet, TransNet, TransUNet, Large Kernel Matters, or Deeplabv3+, or a model obtained by appropriately combining these. Furthermore, a model belonging to other categories, for example, a model based on ResNet, a support vector-machine (SVM), a neural network (NN) model, a K-NN model clustering, k-means, a decision tree, or a logistic regression model, or a model obtained by appropriately combining these may be used. Furthermore, the layer configuration of the model 131 is not limited to that of the above embodiment. For example, the configuration of the T encoder 1310 may be appropriately changed; the convolution layers of the U encoder 1311 and the U decoder 1312 may be added or omitted; or these layers may be increased or decreased.
(2) The learning method according to the above embodiment is merely an example, and is not limited to the method of the above embodiment. For example, the method for calculating an error between the output data and the ground truth data and the parameter adjustment algorithm can be appropriately changed.
(3) In the above embodiment, the analysis device 1 is configured as one device, but the functions of the units 10A to 10D and the storage unit 13 may be distributed to a plurality of devices. Therefore, each step of the analysis method and the method for generating a trained model may be distributed and executed by one or a plurality of computers.
(4) In addition to the CPU and the GPU, the control unit 10 of the analysis device 1 may include a vector processor, a field programmable gate array (FPGA), an application specific integrated circuit (ASIC), other artificial intelligence dedicated chips, or other members. Furthermore, the operation of the control unit 10 may be executed by one or a plurality of processors.
(5) The method of deriving the feature amount related to the structure and physical properties of the rubber composition based on the output data of the model 131 is not limited to the method of the above embodiment, and may be performed by a method other than the PH method. For example, based on the output data of the model 131, an average size of regions corresponding to a specific component, a distance between regions, an index indicating the shape of a region, and an index relating to physical properties correlated therewith can be derived by a known image processing algorithm, and these indices are also included in the feature amount in the present invention. Furthermore, a new machine learning model that has learned the relationship between the output data of the model 131 and the feature amount regarding at least one of the structure and the physical properties of the rubber composition may be constructed and then, based on output data from this machine learning model, the feature amount regarding at least one of the structure and the physical properties of the rubber composition may be derived.
(6) In the above embodiment, a rubber composition containing four components is analyzed. Moreover, a rubber composition containing three or less components or five or more components may be analyzed. Yet, the method of the present invention is preferably used to analyze a rubber composition containing three or more components or as a method for generating a machine learning model used to analyze a rubber composition containing three or more components.
(7) In the evaluation of an individual learning model in the above embodiment, whether the region of each component is well expressed in the output data output when sample data is input to a generated learning model may be determined by sensory evaluation through human visual inspection. The selection of training data pairs included in training data sets to generate a learning model or preparation of augmented data sets may also be performed by sensory evaluation through human visual inspection. In an example of such sensory evaluation, a validation segment for each component is determined to compare output data with sample data, and three or more operators who have at least one year of experience in observation of microscopic rubber composition images observe the validation segment for qualitative assessment and assign scores. Yet, the evaluation method is not limited to the above method. This point will be described below with reference to FIG. 20.

In FIG. 20, ground truth data is compared with output data output using a learning model. The pixels (256 × 256) of the ground truth data are compared with the corresponding pixels (256 × 256) of the output data to analyze matches or mismatches between them. Here, the higher the proportion of the correct answer (diagonal element) for each component is in the matrix in FIG. 20, the more the model can be selected as an appropriate learning model.

Moreover, bias in the composition expressed by a learning model can be identified by checking incorrect answer elements other than the correct elements in the matrix. For example, in the example in FIG. 20, NR tends to be incorrectly expressed as SBR, and SBR tends to be incorrectly expressed as CB. Such a tendency is usable as a basis for selecting training data sets.

### REFERENCE SIGNS LIST

- 1: Analysis device
- 10: Control unit
- 10A: Acquisition unit
- 10B: Output derivation unit
- 10C: Feature amount derivation unit
- 10D: Learning unit
- 131: Model

## Claims

1. A method for generating a machine learning model comprising:
preparing a plurality of first training data sets with different content to perform machine learning, the machine learning including inputting input data generated from a microscopic image showing a plurality of components contained in a rubber composition and outputting output data defining regions corresponding to the respective components appearing in the microscopic image;
preparing a plurality of first machine learning models respectively having been trained using the first training data sets;
comparing output data from the first machine learning models with each other to select one of the first machine learning models based on a first evaluation standard;
preparing a plurality of second training data sets with different content by partly modifying the first training data set used for training the selected first machine learning model according to a first criterion;
preparing a plurality of second machine learning models respectively having been trained using the second training data sets; and
comparing output data from the second machine learning models with each other to select one of the second machine learning models based on a second evaluation standard.

2. The method for generating a machine learning model according to claim 1, further comprising:
preparing at least one third training data set with different content by partly modifying the second training data set used for training the selected second machine learning model according to a second criterion; and
preparing at least one third machine learning model each having been trained using the at least one third training data set.

3. The method for generating a machine learning model according to claim 1 or 2,
wherein the regions are colored with different colors for the respective corresponding components, and
the criteria each relate to at least one of an area of each region of the corresponding component or a distance between the regions.

4. The method for generating a machine learning model according to claim 1 or 2,
wherein the machine learning model to be generated is configured as a model selected from the group consisting of an attention network, SegNet, a feature pyramid network, UNet, PSPNet, TransNet, and TransUNet, or a model based on a model selected from the group.

5. The method for generating a machine learning model according to claim 1 or 2,
wherein the microscopic image is an image of the rubber composition captured with an electron microscope.

6. A machine learning model generation device comprising one or a plurality of processors configured to execute the method for generating a machine learning model according to claim 1 or 2.

7. A machine learning model generation program, the generation program causing one or a plurality of processors to execute the method for generating a machine learning model according to claim 1 or 2.
